# EUROPÄISCHE PATENTANMELDUNG

(11) **EP 1 136 743 A1**
(43) Veröffentlichungstag der Anmeldung: **26.09.2001**
(21) Anmeldenummer: 01106300.5
(22) Anmeldetag: 15.03.2001
(51) Int. Cl.: F16L 47/00

(54) **Rohrformstücke**

(30) Priorität: 24.03.2000 IT BZ000017
(71) Anmelder: POLARIS KG-SAS di TROGMANN MATTHIAS &CO., 39020 Parcines (BZ) (IT)
(72) Erfinder: Trogmann, Matthias, 39020 Parcines (BZ) (IT)
(74) Vertreter: Oberosler, Ludwig

(57) **Zusammenfassung**

Die Rohrformstücke welche äußere und/oder innere Wandstärkenverdickungen aufweisen um vorstehende Ringflansche (5a), Gewindeabschnitte und/oder Anschläge zu bilden, bestehen aus einem metallischen Rohrstück (1,2,3,4) an welchem die Wandverdickung durch Anformen eines Kunststoffteiles (5,5g,6,7) im Spritzverfahren, durch Aufpressen oder durch Schrumpfen gebildet wird wobei eventuell auch die Stirnfläche des Rohrstückes abgedeckt wird.

## Beschreibung

Für die Führung von Flüssigkeiten, insbesondere in der Lebensmittelindustrie, werden in großer Stückzahl Anschlußstücke und Kupplungsstücke aus rostfreiem Stahl eingesetzt. Diese Verbindungs-, Kupplungs- oder Anschlußelemente weisen oft eine Überwurfmutter, ein Gewinde und/oder Radialflansche auf. All diese Anformungen erfordern eine Vergrößerung des Außendurchmessers des entsprechenden Rohrbereiches, was sich wegen der erhöhten Materialmenge und dem erhöhten Arbeitsaufwand sehr auf die Herstellungskosten auswirkt.

Üblicherweise weisen die Rohlinge für die Herstellung besagter Anschluß- und Verbindungsstücke einen Bereich mit größerer Wandstärke auf an welchem in einem folgenden Arbeitsgang, durch spanabhebende Bearbeitung, Gewinde, Radialflansche für die Auflage von Überwurfmuttern, Radialflansche für den Anschlag der Schlauchenden ausgeformt werden. Diese nachträgliche Bearbeitung wirkt sich sehr auf den Preis der Fertigteile aus.

Die Erfindung stellt sich die Aufgabe Rohranschlußstücke der vorher beschriebenen Art zu schaffen welche einfach und preisgünstiger herstellbar sind und überdies eine verbesserte Abdichtung unter Vermeidung von Spalten oder Hohlräumen im Anschlußbereich und eine exakte koaxiale Zentrierung zwischen den Durchflußquerschnitten der Anschlußteile ermöglichen.

Zur Lösung dieser Aufgabe schlägt die Erfindung vor die vom Rohrelement vorstehenden oder mit Gewinde versehenen Teile im Spritzgußverfahren aus Kunststoff am Rohrelement aus rostfreiem Stahl anzuformen, ohne jedoch ein Anbringen durch Aufschieben unter Druck oder durch Schrumpfen auszuschließen.

Dieses Herstellungsverfahren ermöglicht es für die Mehrzahl der Stücke einfache Rohrstücke aus rostfreiem Stahl zu verwenden welche für den Druck und die Durchflußmenge der zu führende Flüssigkeit geeigneten Querschnitt aufweisen. Dieses Rohrstück weist vorteilhafterweise außen, im Bereich der Anbringung des Kunststoffteiles, zum Beispiel eine oder mehrere Rillen, eine Rändelung oder eine andere Bearbeitung auf welche eine leichte, gegebenenfalls wiederholte, Veränderung des Außendurchmessers bewirkt um eine Verankerung des durch Spritzgußverfahren angebrachten Kunststoffteiles an der Rohraußenfläche zu bewirken. Diese Verankerung zwischen den zwei Teilen aus unterschiedlichem Werkstoff hat eine absolute Abdichtung zur Folge und verhindert das Gleiten zwischen den Teilen auch wenn diese durch achsial wirkende Kräfte belastet sind welche durch den Druck im Innern des Rohrteiles und/oder durch mechanische Teile wie zum Beispiel durch Überwurfmuttern welche an den abstehenden Radialflanschen angreifen, verursacht werden.

Gemäß einer Weiterentwicklung des Erfindungsgedankens können die Bereiche der Änderung des Außendurchmessers durch die selben Außenrillen gebildet werden welche am selben Rohrstück vorgesehen sind um ein Schlauchende daran zu befestigen indem dieses aufgeschoben wird, wobei diese Rillen die Ausformung von vorstehenden Ringen mit sägezahnartigem Querschnitt bewirken so daß das Aufschieben des Schlauchendes begünstigt und das Abziehen verhindert wird. Diese Lösung bietet den Vorteil daß das Rohrstück an einer einzigen Werkzeugmaschine und durch ein einziges Werkzeug bearbeitet werden kann oder daß das Rohrstück von einem Rohr abgetrennt werden kann welches über seiner gesamten Länge mit Außenrillen versehen ist.

Natürlich schließt die Erfindung nicht aus, daß die Verankerung zwischen dem Rohrstück und dem Kunststoffteil durch, von der Rohraußenfläche vorstehende Ringe bewirkt wird welche zum Beispiel durch einem Walzvorgang von innen unter Ausbildung einer inneren Rille, welche als Dichtungssitz dienen kann, ausgeformt wird. Die Erfindung schließt nicht aus, daß der Kunststoffteil mit einem konischen Bereich versehen sein kann und daß dieser, indem er an einem entsprechenden Sitz aufliegt, unter achsialer Belastung, durch eine radiale Kraftkomponente, die Verankerung zwischen dem Metallteil und dem Kunststoffteil zusätzlich sichert. Es ist evident, daß die Anfomung eines Kunststoffteiles, welches keine nachträgliche Bearbeitung erfordert, an ein metallisches Rohrstück viel kostengünstiger erfolgen kann als die Ausformung durch spanabhebende Bearbeitung eines Metallrohlings mit geeignetem Querschnitt.

Die Erfindung ermöglicht es weiters dem Kunststoffteil weitere Funktionen zuzuteilen wie zum Beispiel die Funktion einer Dichtung wobei auch die Stirnfläche des Metallrohrstückes mit Kunststoff abgedeckt ist. In diesem Fall wird die mit Kunststoff überzogene Stirnseite gegen den Sitz aus Metall gedrückt wobei sich, bei entsprechender Materialauswahl, die Kunststoffschicht verformt um als Dichtung zu wirken. Weiters ermöglicht die erfindungsgemäße Lösung am Kunststoffteil Rillen oder andere Sitze für Dichtungen, welche gleichzeitig mit dem Spritzgußvorgang eingeformt werden, vorzusehen. Gemäß einer Weiterentwicklung des Erfindungsgedankens sind die Dichtungsflächen mit einer Kunststoffschicht versehen welche geeignet ist als Dichtung zu wirken; weiters können die Dichtfunktionen auch von flexiblen Dichtungslippen übernommen werden welche einstückig am Kunststoffteil angeformt sind. Natürlich werden im Falle der Führung von Lebensmittel die Eigenschaften des Kunststoffteiles den vom Gesetz vorgesehenen Normen betreffend Hygiene und Sanität entsprechen. In bestimmten Fällen, wo in den Leitungen durch die Anwendung von bekannten Anschlußstücken oft ein Staubereich des geführten Mediums entsteht welcher die Reinhaltung und somit die Hygiene erschwert, ist es durch die erfindungsgemäße Lösung möglich die Zwischenräume zwischen den verbundenen Teilen auf ein Minimum zu reduzieren und zu eliminieren.

Gemäß einer weiteren erfindungsgemäßen Ausführungsform weist der angeformte Kunststoffreil in seiner axialen Längserstreckung, im Bereich welcher vom äußeren Anschlußteil überdeckt wird, z.B. nahe am Radialflansch für die Überwurfmutter, einen Abschnitt mit leicht größerem Durchmesser auf. Der Übergang zwischen den zylindrischen Abschnitten mit leicht unterschiedlichem Durchmesser ist dabei konisch und der größere Durchmesser ist so gewählt, daß bei Aufstecken des äußeren Anschlußstückes unter axialem Druck am Abschnitt mit größerem Durchmesser ein Preßsitz entsteht. Dies bewirkt eine optimale Abdichtung und eine koaxiale Zentrierung zwischen den Durchflußquerschnitten der verbundenen Rohrstücke. Diese Koaxialität der Durchflußquerschnitte bewirkt einen wirbellosen Durchfluß was, z.B. bei Kohlensäure-haltigen Getränken das Aufschäumen verhindert. Bei entsprechender Abstimmung der Maße am Kunststoffteil und am aufgesetzten Anschlußteil besteht die Möglichkeit stirnseitig am Kunststoffteil, an der Mantelfläche und an der Stirnfläche des Ringflansches eine Abdichtung zu schaffen und die Bildung von Dichtungsspalten zu vermeiden. Eine weitere erfindungsgemäße vorteilhafte Lösung wird dadurch erreicht, daß ein Ringflansch in Form einer Metallringscheibe auf das Metallrohr im Preßsitz angebracht wird. Dies kann bei entsprechender Bemaßung der Teile durch Aufschieben der Metallringscheibe oder durch Ausweiten des Metallrohres, z.B. mittels Dorn von innen, erfolgen. In diesem Fall kann anschließend am Rohrendbereich und an der Ringscheibe anliegend das Kunststoffteil angeformt werden.

Die Erfindung wird nachstehend anhand einiger erfindungsgemäßer Ausführungsbeispiele von Rohrformstücken welche in der beigelegten Zeichnung schematisch dargestellt sind näher erklärt, dabei erfüllen die Zeichnungen rein erklärenden, nicht begrenzenden Zweck.

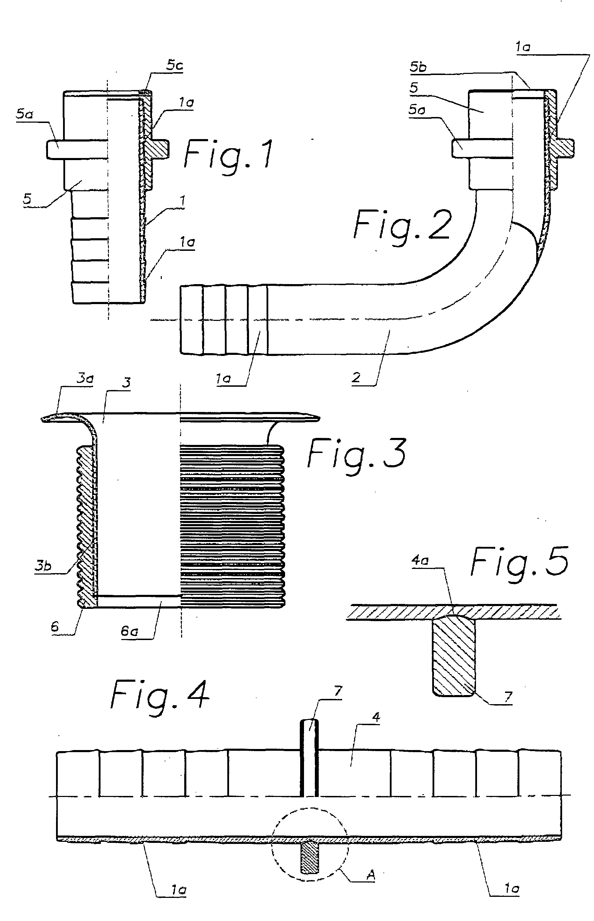

Die Fig. 1 zeigt die Seitenansicht, mit teilweiser Schnittdarstellung, eines erfindungsgemäßen geraden Rohranschlußteiles welches einen angeformten vostehenden Radialflansch aus Kunststoff aufweist an welchem eine nicht dargestellte Überwurfmutter wirken kann; an der Stirnfläche ist eine Schicht aus elastischerem Werkstoff vorgesehen.

Die Fig. 2 zeigt die Seitenansicht, mit teilweiser Schnittdarstellung, eines erfindungsgemäßen gebogenen Rohranschlußteiles welches einen angeformten vorstehenden Radialflansch aus Kunststoff aufweist an welchem eine nicht dargestellte Überwurfmutter wirken kann.

Die Fig. 3 zeigt die Seitenansicht, mit teilweiser Schnittdarstllung, eines erfindungsgemäßen Rohranschlußteiles welches zum Beispiel als Ausflußstutzen dienen kann und einen angeformten Gewindeteil aus Kunststoff aufweist.

Die Fig. 4 zeigt die Seitenansicht, mit teilweiser Schnittdarstellung, eines erfindungsgemäßen Schlauchverbindungsstückes mit einem im Mittelbereich aus Kunststoff angeformten vorstehendem Radialflansch welcher für die aufgesteckten Schlauchenden als Anschlag dient.

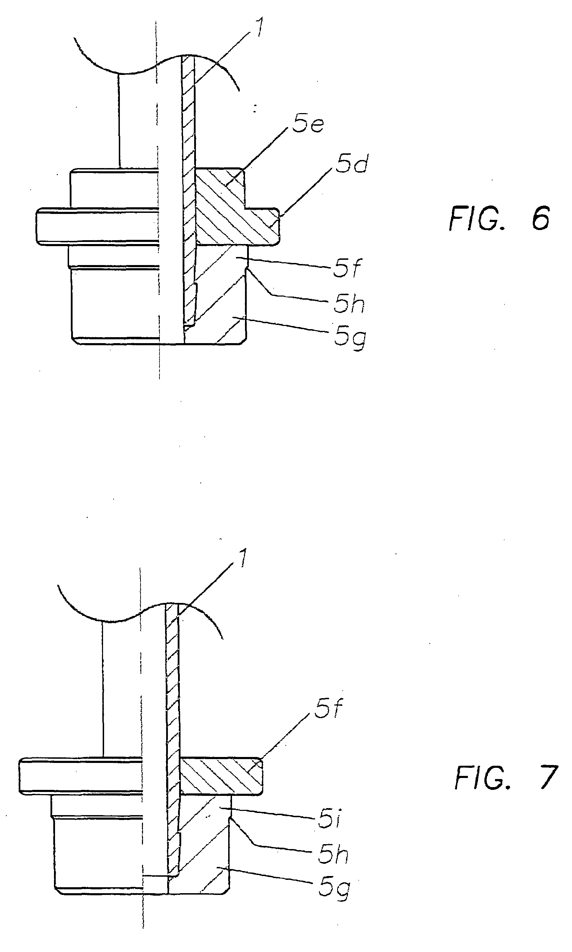

Die Fig. 5 zeigt in größerem Maßstab das in Fig. 5 mit A bezeichnete Detail.

Die Fig. 6 zeigt die Seitenansicht, mit teilweiser Schnittdarstellung, eines erfindungsgemäßen Rohranschlußteiles mit abgestuftem metallischen, im Preßsitz auf dem Rohrteil befestigter Metallringscheibe mit Abstufung und mit am Endbereich des Rohrteiles, anliegend an der Ringscheibe angeformtem Kunststoffteil.

Die Fig. 7 zeigt in Seitenansicht mit teilweiser Schnittdarstellung, eines erfindungsgemäßen Rohranschlußteiles gemäß Fig. 6 mit einfacher im Preßsitz befestigter Metallringscheibe.

Die erfindungsgemäßen Rohrformstücke bestehen aus einem metallischen Rohrstück 1, 2, 3, 4 und aus einem im Spritzgußverfahren, Aufstecken im Preßsitz oder durch Schrumpfung unter Wärmeeinwirkung außen angeformten Teil aus Kunststoff 5, 5g, 6, 7. Erfindungsgemäß kann am Rohrstück 1, 2, 3, 4, außer dem angeformten Kunststoffteil auch eine einfache oder abgestufte Metallringscheibe 5f, 5d im Preßsitz befestigt sein.

Je nach Anwendungsbereich des Rohrformstückes kann das angeformte Kunststoffteil unterschiedliche Formen aufweisen, wie zum Beispiel die Form einer Muffe mit vorstehendem Radialflansch 5a an welchem eine Überwurfmutter wirken kann, die Form eines im Mittelbereich vorstehenden Radialflansches 7 als Anschlag für auf den Metallteil aufgesteckte Schlauchenden oder die Form eines Gewindeelementes 6 an welchem zum Beispiel ein Gewindering aufschraubbar ist.

Das metallische Rohrstück 1, 2, 3, 4 ist vorteilhafterweise im, vom Kunststoffteil 5, 6, 7 abgedeckten Bereich, an der Außenfläche mit umlaufenden einzelnen oder mehrfachen Rillen 1a, 3b, 4a, oder anstatt dieser mit vorstehenden Ringen, mit einer Rändelung oder mit anderen Ausformungen welche eine Änderung des Außendurchmessers bewirken versehen, so daß eine Verankerung des Kunststoffteiles am metallischen Rohrformstück und somit ein Abdichten und Verhindern des achsialen Verschiebens sichergestellt ist.

Je nach Anwendungsbereich der Rohrformstücke kann das metallische Rohrstück einen Endbereich zum Aufstecken eines Schlauchendes, einen vorstehenden Radialflansch 3a als Anschlag für eine ebene Fläche welche quer zum Rohrstück verläuft oder einen Endbereich welcher beliebige von der Anwendung und/oder von der Verbindungsart bestimmte Form haben kann, aufweisen. Der zweite Endbereich des metallischen Rohrstückes wird üblicherweise den aus Kunststoff angeformten Teil aufweisen, es sind aber auch Lösungen möglich wo der Kunststoffteil 7 in einem Bereich zwischen den beiden Endbereichen des Rohrstückes angeformt ist wobei diese Endbereiche zueinander identisch oder unterschiedlich sein können.

In verschiedenen Fällen kann es vorteilhaft sein, daß der Kunststoffteil 5, 6 die Stirnfläche des metallischen Rohrstückes abdeckt und so durch die Kunststoffstirnfläche 5b, 6a eine Dichtungsfläche, oder den Sitz für eine Dichtung bildet. Erfindungsgemäß kann der Kunststoffteil mit einer Schicht 5c aus geeignetem Werkstoff versehen sein um als Dichtung zu wirken oder einstückig mit einer fexiblen Lippe versehen sein welche als Dichtung dient.

Natürlich schließt die Erfindung nicht aus am selben Rohrstück mehr als einen Kunststoffteil vorzusehen welche gleicher oder unterschiedlicher Art sein können, zum Beispiel können an beiden Enden des Rohrteiles 1 oder 2 die selben Kunststoffteile 5 mit vorstehendem Radialflansch 5a für eine Überwurfmutter vorgeshen sein. An einem der Enden kann ein Kunststoffteil 5 mit Radialflansch 5a vorgesehen werden während am anderen Ende der Kunststoffteil 6 mit Außengewinde vorgesehen ist.

Gemäß einer weiteren Ausführungsform des Erfindungsgedankens kann der Kunststoffteil auch innen im metallischen Rohrstück vorgesehen sein, zum Beispiel um über einen innenliegenden Anschlag oder über ein Innengewinde verfügen zu können.

Erfindungsgemäß kann weiters am Rohrstück 1 (Fig, 6,7) eine metallische Ringscheibe 5d, 5f im Preßsitz befestigt sein. Dieser Preßsitz kann entweder durch eine Preßpassung zwischen dem Innendurchmesser der Ringscheibe 5d, 5f und dem Außendurchmesser des Rohrstückes 1 oder durch Ausweiten des Rohrstückes 1, z.B. durch einen Dorn, hergestellt werden. Der angeformte Kunststoffteil 5g wird in diesem Fall an der Ringscheibe 5d, 5f anliegend angeformt. Die Ringscheibe 5d kann eine oder mehrere Abstufungen 5e aufweisen welche den daran wirkenden Anschlußelementen entsprechend ausgeformt sind. Der Kunststoffteil kann erfindungsgemäß einen Abschnitt 5i mit leicht größerem Durchmesser mit konischem Übergang 5h aufweisen wodurch am entsprechenden axial aufgesetzten Anschlußteil eine radiale Preßdichtung und die koaxiale Zentrierung zwischen den Durchflußquerschnitten der verbundenen Rohrteile, erreicht wird.

## Patentansprüche

1. Rohrformstücke welche äußere und/oder innere Vergrößerungen der Rohrwand aufweisen welche vorstehende Radialflansche, Gewinde und/oder Anschläge bilden, **dadurch gekennzeichnet, daß** die Rohrformstücke aus einem metallischen Rohrelement (1, 2, 3, 4) bestehen an welchem die Vergrößerung der Rohrwandstärke durch ein, im Spritzgußverfahren, durch Aufschieben im Preßsitz oder durch Schrumpfen, angeformtes Kunststoffteil (5, 6, 7) welcher eventuell auch die Stirnfläche des Metallrohres abdeckt, gebildet wird.

2. Rohrformstück gemäß Anspruch 1, **dadurch gekennzeichnet, daß** das metallische Rohrstück (1, 2, 3) an der vom Kunststoffteil (5, 5g, 6, 7) abgedeckten Oberfläche eine oder mehrere Rillen und/oder eine oder mehr vorstehende Stege und/oder Vorsprünge oder Vertiefungen allgemein und/oder eine Rändelung oder eine andere Aufrauhung der Oberfläche aufweist.

3. Rohrformstück gemäß Anspruch 1 und 2, **dadurch gekennzeichnet, daß** die Rillen und/oder die vorstehenden Stege welche am metallischen Rohrstück vorgesehen sind an dessen gesamten Längserstreckung vorgesehen sind und gleichzeitig die Rillen oder Stege sind welche die Verankerung zwischen dem Rohrteil und einem aufgesteckten Schlauchende bewirken.

4. Rohrformstück gemäß Anspruch 1, **dadurch gekennzeichnet, daß** am metallischen Rohrstück (1, 2, 3, 4) selbst mehrere Kunststoffteile (5, 5g, 6, 7) gleicher oder unterschiedlicher Art, außen und/oder innen, an den Endbereichen und/oder im Mittelbereich, angeformt sein können.

5. Rohrformstück gemäß Anspruch 1, **dadurch gekennzeichnet, daß** die Stirnfläche (5a, 6b) des Kunststoffteiles (5, 6) und/oder die Flächen welche auf das aufmontierte Kupplungselement wirkt, bzw. wirken die Funktion einer Dichtungsfläche ausüben und/oder mit einem Sitz für die Aufnahme von Dichtungen versehen sind und daß jene Flächen welche als Dichtung wirken eine Beschichtung (5c) aus geeignetem Werkstoff oder eine elastisch verformbare Lippe aufweisen können welche mit dem Kunststoffteil einstückig ist.

6. Rohrformstück gemäß Anspruch 1, **dadurch gekennzeichnet, daß** am metallischen Rohrstück (1) eine metallische Ringscheibe (5d, 5f) im Preßsitz montiert ist und daß anliegend an diese metallische Ringscheibe (5d, 5f) das Kunststoffelement (5, 5g, 6, 7) angeformt ist.

7. Rohrformstück gemäß Anspruch 1, **dadurch gekennzeichnet, daß** der zylindrische Abschnitt des Kunststoffteiles 5, 5g welcher von einem entsprechenden Anschlußstück abgedeckt wird einen Abschnitt (5i) aufweist welcher größeren Durchmesser und einen konischen Übergang (5h) aufweist wodurch bei Aufsetzen des äußeren Anschlußstückes an diesem Abschnitt (5i) ein Preßsitz entsteht was eine koaxiale Ausrichtung der Durchflußquerschnitte der verbundenen Rohrteile und die Schaffung eines eventuell zusätzlichen Dichtungsbereiches bewirkt.
